Europäisches Patentamt

European Patent Office

Office européen des brevets

(11) Veröffentlichungsnummer: **0 255 465**
A2

# (12) EUROPÄISCHE PATENTANMELDUNG

(21) Anmeldenummer: 87730051.7

(22) Anmeldetag: 08.05.87

(51) Int. Cl.⁴: **B 32 B 15/01**
F 16 L 9/14

(30) Priorität: 31.07.86 DE 3625694

(43) Veröffentlichungstag der Anmeldung:
03.02.88 Patentblatt 88/05

(84) Benannte Vertragsstaaten:
DE ES FR GB IT NL SE

(71) Anmelder: MANNESMANN Aktiengesellschaft
Mannesmannufer 2 Postfach 5501
D-4000 Düsseldorf 1 (DE)

(72) Erfinder: Dietzel, Hans-Ulrich, Dipl.-Ing.
Parkring 63
D-6837 St. Leon Rot (DE)

Obering, Horst Abel
Jahnstrasse 5
D-6909 Walldorf (DE)

Hahn, Rüdiger, Dipl.-Ing.
Amselweg 19
D-6909 Walldorf (DE)

(74) Vertreter: Meissner, Peter E., Dipl.-Ing. et al
Meissner & Meissner Patentanwälte Herbertstrasse 22
D-1000 Berlin 33 Grunewald (DE)

(54) Kleinkalibriges Mehrlagenrohr aus Metall.

(57) Die Erfindung betrifft ein kleinkalibriges Mehrlagenrohr au Metall, insbesondere Rohr für hydraulische Bremsanlagen für Kraftfahrzeuge, das aus einem zumindest einseitig mit einer Lotschicht überzogenen flachen Metallband nach den sogenannten Bundy-Verfahren hergestellt und gelötet ist. Um bei größtmöglicher Dauerbeigewechselfestigkeit des Rohres und hoher mechanischer Beanspruchung bei Innendruck gleichzeitig eine größtmögliche Beanspruchungsfähigkeit in bezug auf chemische Angriffe zu gewährleisten wird vorgeschlagen, daß das Metallband (1) aus Kupfer oder einer korrosionsbeständigen Kupferlegierung besteht und daß die Lotschicht (2) aus einem gegenüber der Kupferlegierung niedriger schmelzenden Metall besteht.

EP 0 255 465 A2

**Beschreibung**

Die Erfindung betrifft ein kleinkalibriges Mehrlagenrohr aus Metall, insbesondere ein Rohr für hydraulische Bremsanlagen von Kraftfahrzeugen, das aus einem ein- oder beidseitig mit einer Lotschicht überzogenen flachen Metallband nach den sogenannten Bundy-Verfahren hergestellt und gelötet ist.

Ein solches Metallrohr dient der Leitung von Flüssigkeiten (unter erhöhten Drücken), wie z.B. Bremsflüssigkeiten oder Kraftstoffen, und muß daher mechanisch äußerst beanspruchungsfähig und gegen äußere und auch gegen innere chemische Einflüsse geschützt sein.

In der Automobilindustrie werden als Kraftstoffleitungen nahtlose, geschweißte oder doppelwandig eingerollte, hartgelötete Stahlrohre eingesetzt. Als Bremsleitung wird praktisch nur doppelwandiges hartgelötetes Stahlrohr verwendet. Solche Stahlrohre werden nach den sogenannten Bundy-Verfahren hergestellt und gelötet, die z.B. in der DE-OS 30 30 595 und der DE-OS 30 16 134 beschrieben sind. Um solche Stahlrohre an Kraftfahrzeugen einzusetzen und diese vor den Einflüssen beim Fahren, wie z.B. Steinschlag, Salzwasser und dgl., zu schützen, müssen diese daher mit einer Schutzschicht versehen werden. Die Verfahren zum Aufbringen derartiger Korrosionsschutzschichten sind aufwendig und kompliziert.

Es werden in Einzelfällen anstelle von korrosionsgeschützten Stahlrohren auch nahtlose Rohre aus Kupferlegierungen eingesetzt. Mit nahtlosen Rohren aus Kupferlegierungen ist der Nachteil verbunden, daß Probleme durch die Einwandigkeit entstehen. Bei der Herstellung können durch das Ziehen im kalten Zustand Anrisse durch innere Spannungen entstehen, die später zum Bruch führen. In derartigen Kupferrohren bilden sich auch Spannungsrisse durch Einwirkung von auf den Straßen befindlichen chemischen Substanzen, die durch Spritzwasser und die Luftströmungen auf die Rohre gelangen.

So ist z.B. das in Mist und Dung enthaltene Ammoniak für Bremsleitungsrohre aus nahtlosen ungeschützten Kupferlegierungen äußerst gefährlich.

Die gattungsgemäße Rohrherstellung bildet gegenüber dem einwandigen Rohr eine grundsätzliche Voraussetzung für nicht rißanfällige Rohre. Bei der Bandherstellung und beim Rollprozeß können nämlich keine derartigen ungünstigen Spannungen wie beim Kaltziehen kleiner Rohre, die später zu Rissen führen können, auftreten. Untersuchungen haben gezeigt, daß außerdem die Dauerbiegewechselfestigkeit eines Mehrlagenrohres wesentlich höher liegt als die Dauerbiegewechselfestigkeit eines einwandigen Rohres aus demselben Werkstoff. Wie sich fernerhin gezeigt hat, kann für den Berstdruck der gattungsgemäß vorausgesetzten Rohre die Festigkeit des Grundwerkstoffes angesetzt werden.

Der Erfindung liegt die Aufgabe zugrunde, bei größtmöglicher Dauerbiegewechselfestigkeit des Rohres und hoher mechanischer Beanspruchung bei Innendruck gleichzeitig eine größtmögliche Beanspruchungsfähigkeit in bezug auf chemische Angriffe zu gewährleisten.

Die gestellte Aufgabe wird durch drei alternative Vorschläge gelöst.

Gemäß einer ersten Alternativen wird erfindungsgemäß vorgeschlagen, daß das Metallband aus Kupfer oder einer korrosionsbestandigen Kupferlegierung besteht und daß die Lotschicht aus einem gegenüber der Kupferlegierung niedrigerschmelzenden Metall besteht.

Nach einer zweiten Alternative wird erfindungsgemäß vorgeschlagen, daß das Metallband folgende Zusammensetzung aufweist: ca. 5 % Nickel, ca. 5 % Aluminium, ca. 1 % Chrom, ca. 3 % Mangan, ca. 2 % Eisen, Rest Kupfer und daß die Lotschicht aus einem gegenüber der Kupferlegierung niedriger schmelzenden Metall besteht.

Gemäß einer dritten Alternativen wird erfindungsgemäß vorgeschlagen, daß das Metallband folgende Zusammensetzung aufweist: ca. 10 % Nickel, ca. 2 % Eisen, weniger als 1 % Mangan, weniger als 1 % Phosphor, weniger als 1 % Kobalt, Rest Kupfer und daß die Lotschicht aus einem gegenüber der Kupferlegierung niedriger schmelzenden Metall besteht.

Die gestellte Aufgabe wird demnach grundsätzlich durch die Doppelwandigkeit und durch die vom Lot bewirkte Oberflächenschutzschicht für das Kupfer bzw. die Kupferlegierung gelöst. Gleichzeitig wird die Beanspruchungsfähigkeit gegen Innendruck erhöht, d.h. die Innendruckfestigkeit wird erheblich gesteigert.

Die drei genannten alternativen Lösungen weisen außerdem den Vorteil einer erhöhten Dauerbiegewechselfestigkeit durch das Mehrlagenrohr gegenüber der Dauerbiegewechselfestigkeit eines einwandigen Rohres auf. Das bedeutet, daß das erfindungsgemäße Rohr sicherer ist und für höhere Beanspruchungen eingesetzt werden kann und an schwingenden, vibrierenden Maschinen, wie z.B. Kraftfahrzeugen, insbesondere Diesel-Fahrzeugen mit weniger Haltepunkten, befestigt werden kann. Außerdem ist die Kupferlegierung durch das verfahrensbedingte niedriger schmelzende Metall vor den Einwirkungen vieler chemischer Substanzen sowie vor Ammoniak, geschützt. Bei nahtlosen Bremsleitungsrohren aus Kupfer oder einer Kupferlegierung kommt es vor, daß sich an Bremszylindern Kupfer ablagert, was zu Schwierigkeiten im Bremssystem führen kann. Bei dem erfindungsgemäßen Rohr können sich wegen der metallischen inneren Schutzschicht, die durch das Lot gebildet wird, keine Kupferionen aus dem Rohr herauslösen. Dadurch werden Störungen an der Bremse durch Kupferablagerungen vermieden. Durch die metallische äußere Schutzschicht wird auch die äußere Oberfläche geschützt. Das Kupfer bzw. die Kupferlegierung können sich nicht in Korrosionsprodukte, wie Grünspan, umwandeln, was eine Wanddickenverringerung darstellen würde.

Nach der Weiteren Erfindung ist vorgesehen, daß die Lotschicht aus Zinn oder aus einer Blei-Zinn-Legierung besteht.

Eine andere Verbesserung der Erfindung besteht darin, daß die Rohraußenfläche durch eine Mehrschichtabdeckung geschützt ist, bei der die Lotschicht die unterste Schicht bildet.

Eine weitere Verbesserung der Erfindung besteht darin, daß auf der Lotschicht eine oder mehrere Kunststoffschichten aufgetragen sind. Eine solche Kunststoffschicht wird vorteilhafterweise, um eine Mehrschichtabdeckung zu bilden, erst nach Fertigstellung des Rohres auf die Außenfläche aufgetragen.

Ein Ausführungsbeispiel der Erfindung ist in der Zeichnung dargestellt und wird im folgenden näher beschrieben. Es zeigen

Fig. 1 und 2 den Ausgangsquerschnitt eines Mehrlagenrohres, bestehend aus der gekennzeichneten Kupferlegierung und den beidseitigen Lotschichten,

Fig. 2 bis 8 zeigen ein Beispiel möglicher Verfahrensstufen des bzw. 3a - 8a sogenannten Bundy-Verfahrens,

Fig. 9 zeigt eine vergrößerte Darstellung des fertig eingerollten Rohres gemäß Fig. 8 bzw. 8a und

Fig. 10 ein Mehrlagenrohr mit einer auf der Außenfläche angebrachten Mehrschichtabdeckung.

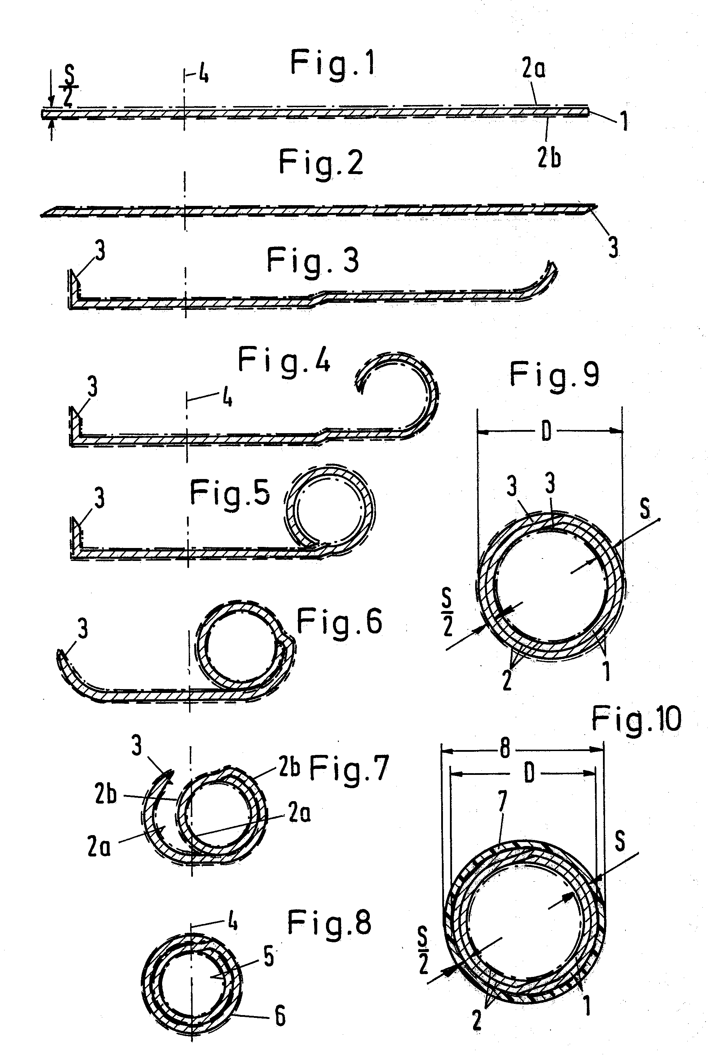

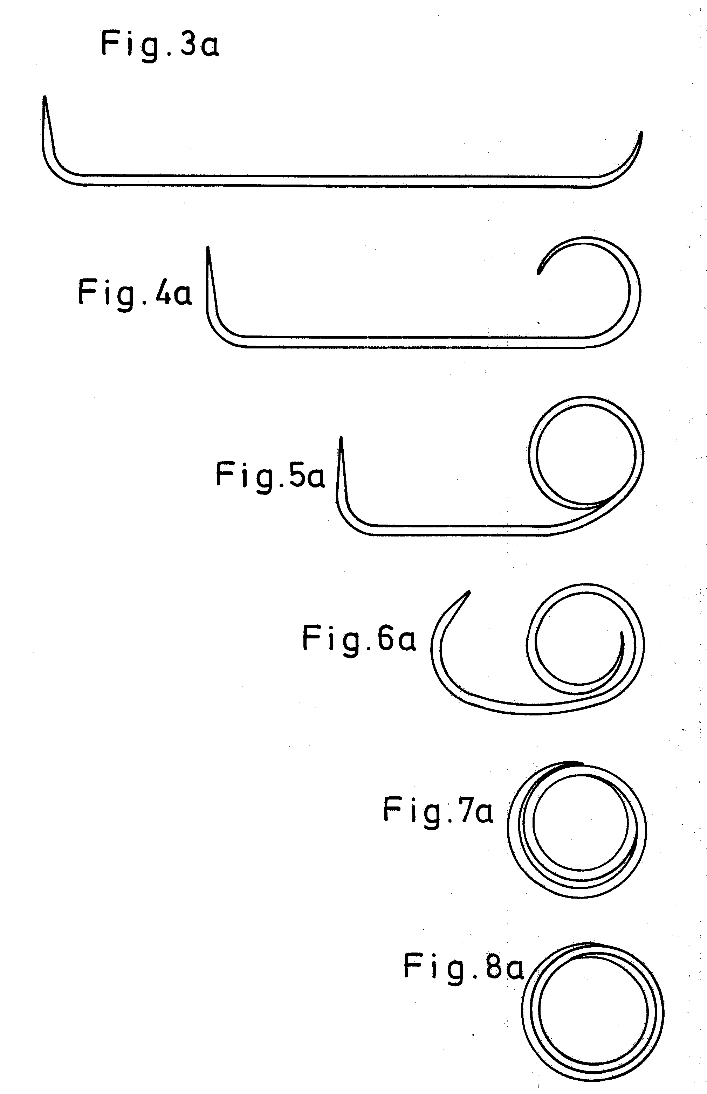

Das Metallband 1 ist z.B. für eine Bremsrohrleitung oder eine Kraftstoffleitung eines Fahrzeuges vorgesehen und besteht aus der gekennzeichneten Kupferlegierung. Es weist für ein Bremsleitungsrohr eine Breite von 27,0 mm und eine Dicke von 0,36 mm auf und wird in Bandform von einer Rolle während der Rohrherstellung kontinuierlich abgewickelt. In diesem Zustand ist bereits die Lotschicht 2a (und 2b) festhaftend auf dem Metallband 1 aufgebracht. Nach einem Abschrägungs-Verfahrensschritt (Fig. 2) wird die Schräge 3 angebracht, wobei das Metallband 1 in der (nicht gezeigten) Behandlungsmaschine bereits seitlich geführt ist, so daß die zukünftige Mittelachse 4 des kleinkalibrigen Mehralagenrohres festliegt. Die anschließenden Einrollverfahrensschritte gemäß den Fig. 2 bis 8 lassen erkennen, daß sich die Lotschicht 2a im Rohrinneren an der Rohrinnenwandung 5 und die Lotschicht 2b an der Rohraußenfläche 6 befindet. Die Wanddicke "s" des Mehrlagenrohres wird im Ausführungsbeispiel durch die zweifache Dicke "s/2" des Metallbandes 1 plus den mehrfachen Dicken der Lotschichten 2 gebildet. Durch die nach dem Wickeln sich anschließende Erwärmung auf Löttemperatur entsteht nach dem Abkühlen eine innige Lötverbindung am gesamten Umfang der Bandlagen und an dem Auslauf und dem Einlauf des Metallbandes 1. Ist das Metallband 1 beidseitig mit Lot überzogen, entsteht am Rohr außen und innen eine Schutzschicht, die aus dem Lot gebildet wird. Wird das Metallband 1 jedoch nur auf einer Seite mit Lot überzogen, so wird, wenn die mit Lot beschichtete Seite (2a) im gezeichneten Beispiel oben in die Maschine einläuft, das Rohr nur auf der Innenseite durch Lot geschützt. Wird nur ein Außenschutz aber kein Innenschutz gewünscht, wird das einseitig mit Lot beschichtete Metallband 1 so in die Maschine eingeführt, daß die Lotschutzschicht (2b) nach unten zeigt.

Solche Mehrlagenrohre können ohne weiteres in einer oder in mehreren Ebenen in einen Kreisbogen bzw. kurvenförmigen Verlauf gebracht werden, wobei äußerst komplizierte Bogen- bzw. Kurvenverläufe möglich sind, wie diese für die Fahrzeugtechnik gefordert werden.

Der besondere Vorteil der mit Lot geschützten inneren Oberfläche an Rohren aus Kupfer bzw. einer Kupferlegierung besteht darin, daß eine Abgage von Kupfer-Ionen in die zu ransportierende Flüssigkeit nicht mehr erfolgen kann. Dafür sorgt die Lotschicht 2, die sich gegenüber der geführten Flüssigkeit völlig neutral verhält. Währenddem an der Rohrinnenwand 5 die Lotschicht 2 keinen weiteren Schutz benötigt, kann (Fig. 10) auch die auf der Rohraußenfläche 6 befindliche Lotschicht 2 noch selbst durch eine oder mehrere Kunststoffschichten 7 zu einer Mehrschichtabdeckung gestaltet werden, so daß die Rohraußenfläche 6 und damit vorteilhafterweise die Lotschicht 2 ebenfalls gegen eine mechanische Einwirkung (z.B. von Steinsplitt) geschützt wird. Der Außendurchmesser D vergrößert sich hierbei um die zweifache Dicke der Kunststoffschicht zum Gesamtdurchmesser 8.

Die erfindungsgemäßen kleinkalibrigen Mehrlagenrohre werden z.B. mit 4,75 mm Außendurchmesser und 0,7 mm Wanddicke verarbeitet. Um höhere Berstdrücke, wie bei Rohren für hydraulische Bremsanlagen erforderlich ist, zu erreichen, sind dem Kupferwerkstoff Kupferlegierungen mit höheren Festigkeiten vorzuziehen.

Die Enden solcher Rohre können gebördelt, aufgeweitet, eingezogen, angestaucht werden. Diese Mehrlagenrohre können außer in der Automobilindustrie, in der Kälteindustrie, bei Haushaltsgeräten, für Hydraulikleitungen, Steuerleitungen, Kühl- und Heizleitungen, Wärmeaustauschern, Zentralschmierungsrohren und dgl. angewendet, u.a. auch für Druckbehälter, Druckgasbehälter, Tankanlagen sowie in der Kerntechnik verwendet werden.

Die vorstehend beschriebene Ausführungsform gilt auch für das Beispiel gemäß den Fig. 3a bis 8a.

**Patentansprüche**

1. Kleinkalibriges Mehrlagenrohr aus Metall, insbesondere Rohr für hydraulische Bremsanlagen für Kraftfahrzeuge, das aus einem zumindest einseitig mit einer Lotschicht überzogenen flachen Metallband nach den sogenannten Bundy-Verfahren hergestellt und gelötet ist, dadurch gekennzeichnet, daß das Metallband (1) aus Kupfer oder einer korrosionsbeständigen Kupferlegierung besteht und daß die Lotschicht (2) aus einem gegenüber der Kupferlegierung niedriger schmelzenden Metall besteht.

2. Kleinkalibriges Mehrlagenrohr aus Metall, insbesondere Rohr für hydraulische Bremsanlagen für Kraftfahrzeuge, das aus einem ein- oder beidseitig mit einer Lotschicht überzogenen flachen Metallband nach den sogenannten Bundy-Verfahren hergestellt und gelötet ist, dadurch gekennzeichnet, daß das Metallband (1) folgende Zusammensetzung aufweist:

ca. 5 % Nickel
ca. 5 % Aluminium
ca. 1 % Chrom
ca. 3 % Mangan
ca. 2 % Eisen
Rest Kupfer

und daß die Lotschicht (2) aus einem gegenüber der Kupferlegierung niedriger schmelzenden Metall besteht.

3. Kleinkalibriges Mehrlagenrohr aus Metall, insbesondere Rohr für hydraulische Bremsanlagen für Kraftfahrzeuge, das aus einem ein- oder beidseitig mit einer Lotschicht überzogenen flachen Metallband nach den sogenannten Bundy-Verfahren hergestellt und gelötet ist, dadurch gekennzeichnet, daß das Metallband (1) folgende Zusammensetzung aufweist:

ca. 10 % Nickel
ca. 2 % Eisen
weniger als 1 % Mangan
weniger als 1 % Phosphor
weniger als 1 % Kobalt
Rest Kupfer

und daß die Lotschicht (2) aus einem gegenüber der Kupferlegierung niedriger schmelzenden Metall besteht.

4. Kleinkalibriges Mehrlagenrohr nach den Ansprüchen 1, 2 oder 3, dadurch gekennzeichnet, daß die Lotschicht (2) aus Zinn oder aus einer Blei-Zinn-Legierung besteht.

5. Kleinkalibriges Mehrlagenrohr nach einem oder mehreren der Ansprüche 1 bis 4, dadurch gekennzeichnet, daß die Rohraußenfläche (6) durch eine Mehrschichtabdeckung geschützt ist, bei der die Lotschicht (2) die unterste Schicht bildet.

6. Kleinkalibriges Mehrlagenrohr nach Anspruch 5, dadurch gekennzeichnet, daß auf der Lotschicht (2) eine oder mehrere Kunststoffschichten (7) aufgetragen sind.

Fig.1

Fig.2

Fig.3

Fig.4

Fig.5

Fig.6

Fig.7

Fig.8

Fig.9

Fig.10

0255465

Fig.3a

Fig.4a

Fig.5a

Fig.6a

Fig.7a

Fig.8a